Europäisches Patentamt

European Patent Office

Office européen des brevets

(19)

(11) **EP 0 739 937 B1**

(12) **EUROPÄISCHE PATENTSCHRIFT**

(45) Veröffentlichungstag und Bekanntmachung des Hinweises auf die Patenterteilung:
**09.05.2001   Patentblatt 2001/19**

(51) Int Cl.[7]: **C08L 23/04**, C08L 23/06, F16L 9/12

(21) Anmeldenummer: **96105851.8**

(22) Anmeldetag: **15.04.1996**

(54) **Rohr aus Polyethylen mit verbesserten mechanischen Eigenschaften**

Tube made from polyethylene having improved mechanical properties

Tuyau de polyéthylène ayant des propriétés mécaniques améliorées

(84) Benannte Vertragsstaaten:
**AT BE CH DE DK ES FI FR GB GR IE IT LI LU NL PT SE**

(30) Priorität: **28.04.1995  DE 19515678**

(43) Veröffentlichungstag der Anmeldung:
**30.10.1996   Patentblatt 1996/44**

(73) Patentinhaber: **Basell Polyolefine GmbH**
**77694 Kehl (DE)**

(72) Erfinder:
 • **Berthold, Joachim, Dr.**
  **65779 Kelkheim (DE)**
 • **Böhm, Ludwig, Dr.**
  **65795 Hattersheim (DE)**
 • **Breuers, Werner, Dr.**
  **65817 Eppstein (DE)**
 • **Enderle, Johannes Friedrich, Dr.**
  **60318 Frankfurt (DE)**
 • **Fleissner, Manfred, Dr.**
  **65760 Eschborn (DE)**
 • **Lecht, Rainer, Dr.**
  **65779 Kelkheim (DE)**

 • **Lüker, Hartmut, Dr.**
  **65719 Hofheim (DE)**
 • **Schulte, Ulrich, DI.**
  **65779 Kelkheim (DE)**
 • **Brömstrup, Heiner, DI.**
  **55262 Heidesheim Am Rhein (DE)**

(74) Vertreter: **Hoffmann, Peter**
**Elenac GmbH**
**Industriepark Höchst**
**Patentstelle**
**Gebäude E 413**
**65926 Frankfurt am Main (DE)**

(56) Entgegenhaltungen:
 **EP-A- 0 423 962      EP-A- 0 603 935**
 **EP-A- 0 707 040      WO-A-96/18677**
 **US-A- 4 461 873      US-A- 5 338 589**

 • **SCHEIRS J ET AL: "PE100 Resins for Pipe Applications: - Continuing the Development into the 21st Century" TRENDS IN POLYMER SCIENCE, Bd. 4, Nr. 12, Dezember 1996, Seite 408-415 XP004071087**

**Beschreibung**

Die vorliegende Erfindung betrifft ein hochfestes Rohr aus Ethylenpolymer mit bimodaler Molmassenverteilung.

Polyethylen wird in großem Umfang zur Herstellung von Rohren, beispielsweise für Gas- und Wassertransportsysteme, verwendet, weil für solche Rohre ein Werkstoff mit hoher mechanischer Festigkeit, hoher Korrosionsfestigkeit und guter Langzeitbeständigkeit benötigt wird. Zahlreiche Publikationen beschreiben Werkstoffe mit den verschiedensten Eigenschaften und Verfahren zu deren Herstellung.

Die EP-A-603,935 beschreibt bereits eine Formmasse auf Basis von Polyethylen, die eine bimodale Molmassenverteilung besitzt und die sich unter anderem auch zur Herstellung von Rohren eignen soll. Rohre, die aus den Formmassen nach dieser Literaturstelle hergestellt sind, lassen jedoch noch in bezug auf ihre Innendruckdauerbelastbarkeit, ihre Spannungsrißbeständigkeit, ihre Tieftemperaturkerbschlagzähigkeit und ihren Widerstand gegen schnelles Rißwachstum zu wünschen übrig.

Um Rohre mit ausgewogenen mechanischen Eigenschaften und damit einer optimalen Eigenschaftskombination zu erreichen, ist es notwendig, einen Rohstoff einzusetzen, der eine noch breitere Molmassenverteilung aufweist. Ein solcher Rohstoff ist in der US-PS 5,338,589 beschrieben und wird mit einem hochaktiven Katalysator hergestellt, der aus der WO 91/18934 bekannt ist und bei dem das Magnesiumalkoholat als gelförmige Suspension eingesetzt wird. Überraschend wurde gefunden, daß der Einsatz dieses Werkstoffes in Formteilen, insbesondere in Rohren, eine gleichzeitige Verbesserung der in teilkristallinen Thermoplasten üblicherweise gegenläufigen Eigenschaften Steifigkeit und Kriechneigung einerseits und Spannungsrißbeständigkeit und Zähigkeit andererseits ermöglicht. Weitere Rohre aus bimodalen Polyethylen formmassen werden in US-A-4 461 873 und EP-A-0 423 962 und in den nicht vorveröffentlichten WO-A-9 618 677 und EP-A-0 707 040 beschrieben.

Gegenstand der Erfindung ist demnach ein hochfestes Kunststoffrohr gemäß Anspruch 1, dessen nähere Ausgestaltung in den auf diesen zurückbezogenen Ansprüchen 2 bis 7 beschrieben ist. Die Erfindung betrifft ferner auch die Verwendung eines erfindungsgemäßen Rohres für den Bau von Gas- und Wasserleitungen.

Das Ethylenpolymer, aus dem das erfindungsgemäße Rohr gefertigt ist, enthält vorzugsweise ein Polyethylen mit einer Dichte (23°C) im Bereich von 0,94 bis 0,96 g/cm$^3$ und einer breiten bimodalen Molmassenverteilung, bei dem das Verhältnis des Gewichts des niedermolekularen Anteils zum Gewicht des höhermolekularen Anteils im Bereich von 0,5 bis 2,0 liegt, vorzugsweise von 0,8 bis 1,8. Das Polyethylen enthält geringe Anteile an weiteren Monomereinheiten wie 1-Buten, 1-Penten, 1-Hexen oder 4-Methylpenten-1.

Die Bimodalität kann als Maß für die Lage der Schwerpunkte der beiden Einzelmolmassenverteilungen mit Hilfe der Viskositätszahlen VZ nach ISO/R 1191 der in den beiden Polymerisationsstufen gebildeten Polymeren beschrieben werden. Dabei beträgt die $VZ_1$ des in der ersten Polymerisationsstufe gebildeten niedermolekularen Polyethylens 40 bis 80 cm$^3$/g, während $VZ_{gesamt}$ des Endprodukts im Bereich von 350 bis 450 cm$^3$/g liegt. $VZ_2$ des in der zweiten Polymerisationsstufe gebildeten höhermolekularen Polyethylens läßt sich nach der folgenden mathematischen Formel berechnen:

$$VZ_2 = \frac{VZ_{gesamt} - w_1 \cdot VZ_1}{1 - w_1}$$

wobei $w_1$ für den Gewichtsanteil des in der ersten Stufe gebildeten niedermolekularen Polyethylens steht, gemessen in Gew.-%, bezogen auf das Gesamtgewicht des in beiden Stufen gebildeten Polyethylens mit bimodaler Molmassenverteilung. Der für $VZ_2$ errechnete Wert liegt normalerweise im Bereich von 500 bis 880 cm$^3$/g.

Das Polyethylen wird durch Polymerisation der Monomeren in Suspension, in Lösung oder in der Gasphase bei Temperaturen im Bereich von 20 bis 120°C, einem Druck im Bereich von 2 bis 60 bar und in Gegenwart eines Ziegler-Katalysators erhalten, der aus einer Übergangsmetallverbindung und einer aluminiumorganischen Verbindung zusammengesetzt ist. Die Polymerisation wird zweistufig geführt, wobei die Molmasse jeweils mit Hilfe von Wasserstoff geregelt wird.

Das Ethylenpolymer für das erfindungsgemäße Rohr kann neben dem Polyethylen noch weitere Zusatzstoffe enthalten. Solche Zusatzstoffe sind beispielsweise Wärmestabilisatoren, Antioxidantien, UV-Absorber, Lichtschutzmittel, Metalldesaktivatoren, peroxidzerstörende Verbindungen, basische Costabilisatoren in Mengen von 0 bis 10 Gew.-%, vorzugsweise 0 bis 5 Gew.-%, aber auch Füllstoffe, Verstärkungsmittel, Weichmacher, Gleitmittel, Emulgatoren, Pigmente, optische Aufheller, Flammschutzmittel, Antistatika, Treibmittel oder Kombinationen von diesen in Gesamtmengen von 0 bis 50 Gew.-%.

Das erfindungsgemäße Rohr wird hergestellt, indem das Ethylenpolymer zunächst in einem Extruder bei Temperaturen im Bereich von 200 bis 250°C plastifiziert und dann durch eine ringförmige Düse ausgepreßt und abgekühlt wird. Rohre der erfindungsgemäßen Art eignen sich generell für alle Druckklassen gemäß DIN 8074.

Für die Verarbeitung zu Rohren können sowohl konventionelle Einschneckenextruder mit glatter Einzugszone als auch Hochleistungsextruder mit feingenutetem Zylinder und förderwirksamem Einzug eingesetzt werden. Die Schnecken werden typischerweise als Dekompressionsschnecken ausgelegt mit einer Länge von 25 bis 30 D (D = Ø). Die Dekompressionsschnecken besitzen eine Austragszone, in der Temperaturunterschiede in der Schmelze ausgeglichen werden und in der die durch Scherung entstandenen Relaxationsspannungen abgebaut werden sollen.

Die vom Extruder kommende Schmelze wird über konisch angeordnete Bohrungen zunächst auf einen Ringquerschnitt verteilt und dann über einen Wendelverteiler oder einen Siebkorb der Dorn/Mundstückskombination zugeführt. Zusätzlich können bei Bedarf noch Stauringe oder andere Konstruktionselemente zur Vergleichmäßigung des Schmelzestromes vor dem Düsenaustritt eingebaut sein.

Die Kalibrierung und Kühlung erfolgt bis hin zu großen Rohrdurchmessern zweckmäßigerweise durch Vakuumkalibrierung. Die eigentliche Formgebung erfolgt mit geschlitzten Kalibrierhülsen, die zur besseren Wärmeabführung aus Buntmetall gefertigt sind. Dabei sorgt ein im Einlauf zugeführter Wasserfilm für ein rasches Abkühlen der Oberfläche des Rohres unter den Kristallitschmelzpunkt und dient zusätzlich als Schmierfilm zum Verringern der Reibungskräfte. Die Gesamtlänge L der Kühlstrecke wird unter der Annahme bemessen, daß eine Schmelze mit einer Temperatur von 220°C mit Hilfe von Wasser mit einer Temperatur von 15 bis 20°C soweit abgekühlt werden soll, daß die Temperatur der Rohrinnenoberfläche maximal 85°C beträgt.

Die Spannungsrißbeständigkeit ist ein Merkmal, das bereits aus der EP-A 436 520 bekannt ist. Der Prozess des langsamen Rißwachstums kann durch molekulare Strukturparameter wie Molmassen- und Comonomerverteilung wesentlich beeinflußt werden. Die Anzahl der sogenannten Tie- oder Verbundmoleküle ist zunächst durch die Kettenlänge des Polymers bestimmt. Die Morphologie von teilkristallinen Polymeren wird zusätzlich durch Comonomereinbau eingestellt, weil die Dicke von Kristallitlamellen durch das Einbringen von Kurzkettenverzweigungen beeinflußt werden kann. Das bedeutet, daß die Anzahl von Tie- oder Verbundmolekülen in Copolymeren höher ist als in Homopolymeren mit vergleichbarer Kettenlänge.

▶ Die Spannungsrißbeständigkeit des erfindungsgemäßen Rohres wird nach einer internen Meßmethode ermittelt. Diese Labormethode ist von M. Fleißner in Kunststoffe 77 (1987), S. 45 ff, beschrieben. Diese Publikation zeigt, daß zwischen der Bestimmung des langsamen Rißwachstums im Zeitstandversuch an rundum gekerbten Probestäben und dem spröden Ast der Zeitstandsinnendruckprüfung nach ISO 1167 ein Zusammenhang besteht. Eine Verkürzung der Zeit bis zum Versagen wird durch die Verkürzung der Rißinitiierungszeit durch die Kerbe (1,6 mm/Rasierklinge) in Ethylenglykol als spannungsrißförderndem Medium bei einer Temperatur von 80°C und einer Zugspannung von 5 MPa erreicht. Die Probenherstellung erfolgt, indem drei Probekörper mit den Abmessungen 10 x 10 x 90 mm aus einer 10 mm dicken Pressplatte herausgesägt werden. Die Probekörper werden rundum mit einer Rasierklinge in einer eigens dafür angefertigten Kerbvorrichtung (siehe Abbildung 5 in kunststoffe 77 (1987)) in der Mitte gekerbt. Die Kerbtiefe beträgt 1,6 mm.

▶ Die Bruchzähigkeit des erfindungsgemäßen Rohres wird ebenfalls nach einer internen Meßmethode an Probestäben mit den Abmessungen 10 x 10 x 80 mm, die aus einer 10 mm dicken Pressplatte herausgesägt wurden, bestimmt. In der bereits erwähnten Kerbvorrichtung werden sechs dieser Probestäbe mit der Rasierklinge in der Mitte gekerbt. Die Kerbtiefe beträgt 1,6 mm. Die Durchführung der Messung entspricht weitgehend der Charpy-Meßprozedur nach ISO 179 bei veränderten Probekörpern und veränderter Schlaggeometrie (Widerlagerabstand). Alle Probekörper werden über eine Zeitdauer von 2 bis 3 h auf die Meßtemperatur von 0°C temperiert. Man legt dann einen Probekörper zügig auf das Widerlager eines Pendelschlagwerks gemäß ISO 179. Der Widerlagerabstand beträgt 60 mm. Der Fall des 2 J Hammers wird ausgelöst, wobei der Fallwinkel auf 160°, die Pendellänge auf 225 mm und die Auftreffgeschwindigkeit aus 2,93 m/sec eingestellt wird. Zur Auswertung der Messung wird der Quotient aus verbrauchter Schlagenergie und Anfangsquerschnittfläche an der Kerbe $a_{FM}$ in mJ/mm$^2$ berechnet. Dabei können nur Werte bei vollständigem Bruch und Scharnierbruch als Grundlage für einen gemeinsamen Mittelwert dienen (siehe ISO 179).

▶ Die Kerbschlagzähigkeit$_{ISO}$ wird nach der ISO 179 gemessen. Die Dimension der Probe beträgt 10 x 4 x 80 mm, wobei eine V-Kerbe mit einem Winkel von 45°, einer Tiefe von 2 mm und einem Kerbgrundradius von 0,25 mm eingenutet wird.

▶ Der Biegekriechmodul wird nach DIN 54852-Z4 als Einminutenwert gemessen.

▶ Der S4-Test (Small Scale Steady State - Test) dient dazu, den Widerstand des Rohres gegen schnelle Rißfortpflanzung zu bestimmen und wird an Rohren der Abmessung PN 10 mit einem Durchmesser von 110 mm durchgeführt. Das genaue Verfahren ist in ISO/DIS 13477 beschrieben. Durch diese Methode wird der kritische Druck $p_c$ in bar ermittelt, oberhalb dessen das unter diesem Druck $p_c$ stehende Rohr längs über die gesamte Länge aufreißt.

Die nachfolgenden Ausführungsbeispiele sollen die Erfindung für den Fachmann noch deutlicher darstellen.

Beispiel 1 (erfindungsgemäß):

Ein Polymeres wurde mit einem Katalysator und nach der Vorschrift der WO 91/18934 unter Einhaltung der nachfolgend in Tabelle 1 angegebenen Betriebsbedingungen hergestellt.

Tabelle 1

|  | Reaktor I Inhalt: 120 l | Reaktor II Inhalt: 120 l |
|---|---|---|
| Temperatur | 83 °C | 83 °C |
| Katalysatorzufuhr | 0,8 mmol/h | ----- |
| Cokatalysatorzufuhr | 15 mmol/h | 30 mmol/h |
| Dispergiermittel (Dieselöl) | 25 l/h | 50 l/h |
| Ethylen | 9 kg/h | 10 kg/h |
| Wasserstoff im Gasraum | 74 Vol.-% | 1 Vol.-% |
| Gesamtdruck | 8,5 bar | 2,7 bar |

Das so hergestellte Polymere hatte einen Schmelzflußindex $MFI_{5/190°C}$ von 0,2 g/10 min und eine Dichte d von 0,948 g/cm$^3$ und wurde in einem Extruder mit einem Durchmesser von 48 mm und einer Länge entsprechend dem 24,4-fachen des Durchmessers (≙ 117,12 cm) bei einer Temperatur von 227 °C plastifiziert und anschließend durch eine ringförmige Düse mit einem Außendurchmesser von 32,1 mm und einem Dorn mit einem Durchmesser von 26,5 mm zu einem Rohr mit einem Durchmesservon 32,1 mm und einer Wanddicke von 3,08 mm unter Zuhilfenahme einer Vakuumkalibrierung extrudiert. Die Abkühlung erfolgte in einem Kühlbad mit einer Länge von 3 m, das auf einer Temperatur von 15°C gehalten wurde. Die gemessenen Eigenschaften sind in der nachfolgenden Tabelle 2 angegeben.

Vergleichsbeispiel:

Ein Ethylenpolymer hergestellt im Einklang mit den Angaben aus Beispiel 1 der EP-A-603 935 in einem Zweistufenverfahren besaß einen Schmelzflußindex $MFI_{5/190°C}$ von 0,48 g/10 min und eine Dichte d von 0,948 g/cm$^3$. Das Ethylenpolymer wurde wie in Beispiel 1 zu einem Rohr gleicher Dimension verarbeitet. Die gemessenen Eigenschaften sind ebenfalls in der nachfolgenden Tabelle 2 zusammengestellt.
Die Abkürzungen der physikalischen Eigenschaften in der Tabelle 2 haben die folgende Bedeutung:

- BKM = Biegekriechmodul, gemessen nach ISO 54852-Z4 in N/mm$^2$ als Einminutenwert,

- BZ = Bruchzähigkeit gemessen nach der vorher beschriebenen internen Meßmethode bei 0°C in mJ/mm$^2$,

- $KSZ_{ISO}$ = Kerbschlagzähigkeit, gemessen nach ISO 179/DIN 53453 in mJ/mm$^2$ bei -20°C und bei +23°C,

- SRB = Spannungsrißbeständigkeit gemessen nach der internen Meßmethode nach M. Fleißner in h,

- VBK = Verarbeitbarkeit, gemessen als Extruderdurchsatz bei einem Extruder mit einem Durchmesser D von 48 mm und einer Länge L von 24,4·D bei einer konstanten Schneckengeschwindigkeit von 80 Umdrehungen pro min in kg/h,

- $p_c$ = Widerstand gegen schnelles Rißwachstum, gemessen nach dem S4-Test in bar an Rohren der Druckklasse PN 10 mit einem Durchmesser von 110 mm.

Tabelle 2

|  | Beispiel 1 | Vergleich |
|---|---|---|
| BKM | 1304 | 1153 |
| BZ | 8,8 | 6,5 |
| $KSZ_{ISO}$(+23/-20°C) | 39,2/24,1 | 14,7/10,7 |
| SRB | >> 1500 | 1300 |
| VBK | 28,2 | 26,3 |
| $p_c$ | > 25 | ca. 10 |

Die Meßwerte zeigen deutlich, daß das erfindungsgemäße Rohr durchweg bessere Festigkeitseigenschaften besaß und auch bei der Herstellung besser verarbeitet werden konnte.

**Patentansprüche**

1. Hochfestes Rohr aus Ethylenpolymer mit bimodaler Molmassenverteilung, dadurch gekennzeichnet, daß das Ethylenpolymer eine Spannungsrißbeständigkeit SRB, gemessen in Ethylenglykol bei einer Temperatur von 80 °C und einer Zugspannung von 5 MPa, von $\geq$ 1400 h und eine Bruchzähigkeit BZ, gemessen bei einer Temperatur von 0 °C, von $\geq$ 7 mJ/mm$^2$ besitzt und Comonomere mit 4 bis 6 Kohlenstoffatomen in einer Menge von 0 bis 0,1 Gew.-% im niedermolekularen Anteil und in einer Menge von 2,5 bis 4 Gew.-% im höhermolekularen Anteil enthält und einen Schmelzflußindex $MFI_{5/190°C}$ von $\leq$ 0,35 g/10 min besitzt.

2. Rohr nach Anspruch 1, dadurch gekennzeichnet, daß es aus Ethylenpolymer gefertigt ist, das einen Biegekriechmodul, gemessen nach DIN 54852-Z4 von $\geq$ 1100 N/mm$^2$ besitzt.

3. Rohr nach Anspruch 1 oder 2, dadurch gekennzeichnet, daß es aus einem Ethylenpolymer gefertigt ist, bei dem das Verhältnis des Gewichts des niedermolekularen Anteils zum Gewicht des höhermolekularen Anteils im Bereich von 0,5 bis 2,0 liegt.

4. Rohr nach Anspruch 3, dadurch gekennzeichnet, daß der niedermolekulare Anteil des Ethylenpolymers einen Schmelzflußindex $MFI_{2,16/190°C}$ im Bereich von 200 bis 800 g/10 min, vorzugsweise von 250 bis 400 g/10 min, besitzt.

5. Rohr nach einem der Ansprüche 1 bis 4, dadurch gekennzeichnet, daß es aus Ethylenpolymer gefertigt ist, das eine Kerbschlagzähigkeit $KSZ_{ISO}$, gemessen nach ISO 179 (DIN 53453) bei -20°C von wenigstens 15 mJ/mm$^2$ und bei +23°C von wenigstens 20 mJ/mm$^2$ besitzt.

6. Rohr nach Anspruch 5, dadurch gekennzeichent, daß es aus Ethylenpolymer gefertigt ist, das eine Kerbschlagzähigkeit, gemessen nach ISO 179 (DIN 53453) bei -20°C von wenigstens 20 mJ/mm$^2$ und bei +23°C von wenigstens 30 mJ/mm$^2$ besitzt.

7. Rohr nach einem der Ansprüche 1 bis 6, dadurch gekennzeichnet, daß es einen Widerstand gegen schnelles Rißwachstum, gemessen nach ISO/DIS 13477 an einem Rohr der Druckklasse PN 10 mit einem Durchmesser von 110 mm (S4-Test), von $\geq$ 20 bar besitzt.

8. Verwendung eines Rohres nach einem der Ansprüche 1 bis 7 zum Transport von Gasen, insbesondere zum Transport von Erdgas.

9. Verwendung eines Rohres nach einem der Ansprüche 1 bis 7 zum Transport von Wasser.

**Claims**

1. A very strong pipe of ethylene polymer having a bimodal molecular weight distribution, wherein the ethylene polymer has a stress cracking resistance SCR, measured in ethylene glycol at a temperature of 80°C and a tensile stress of 5 MPa, of ≥ 1400 h and a fracture toughness FT, measured at a temperature of 0°C, of ≥ 7 mJ/mm$^2$ and contains comonomers having 4 to 6 carbon atoms in an amount of from 0 to 0.1% by weight in the low molecular weight fraction and in an amount of from 2.5 to 4% by weight in the higher molecular weight fraction and has a melt flow index MFI$_{5/190°C}$ of ≤ 0.35 g/10 min.

2. The pipe as claimed in claim 1, which is produced from ethylene polymer and has a modulus of creep in flexure, measured according to DIN 54852-Z4, of ≥ 1100 N/mm$^2$.

3. The pipe as claimed in claim 1 or 2, which is produced from an ethylene polymer in which the ratio of the weight of the low molecular weight fraction to the weight of the higher molecular weight fraction is in the range from 0.5 to 2.0.

4. The pipe as claimed in claim 3, wherein the low molecular weight fraction of the ethylene polymer has a melt flow index MFI$_{2.16/190°C}$ in the range from 200 to 800 g/10 min, preferably from 250 to 400 g/10 min.

5. The pipe as claimed in any of claims 1 to 4, which is produced from ethylene polymer and has a notched impact strength NIS$_{ISO}$, measured according to ISO 179 (DIN 53453), of at least 15 mJ/mm$^2$ at -20°C and of at least 20 mJ/mm$^2$ at +23°C.

6. The pipe as claimed in claim 5, which is produced from ethylene polymer and has a notched impact strength, measured according to ISO 179 (DIN 53453), of at least 20 mJ/mm$^2$ at -20°C and of at least 30 mJ/mm$^2$ at +23°C.

7. The pipe as claimed in any of claims 1 to 6, which has a resistance to rapid crack growth, measured according to ISO/DIS 13477 on a pipe of pressure class PN 10 with a diameter of 110 mm (S4 test), of ≥ 20 bar.

8. The use of a pipe as claimed in any of claims 1 to 7 for transporting gases, in particular for transporting natural gas.

9. The use of a pipe as claimed in any of claims 1 to 7 for transporting water.


**Revendications**

1. Tuyau à haute résistance en polymère d'éthylène ayant une distribution bimodale des masses molaires, caractérisé en ce que le polymère d'éthylène possède une résistance au fendillement sous contrainte SRB, mesurée dans l'éthylène glycol à une température de 80°C et sous une contrainte de tension de 5 MPa, supérieure ou égale à 1400 h et une ténacité à la rupture BZ, mesurée à une température de 0°C, supérieure ou égale à 7 mJ/mm$^2$ et des comonomères avec 4 à 6 atomes de carbone en une quantité de 0 à 0,1 % en poids dans la portion des faibles masses molaires et en une quantité de 2,5 à 4 % en poids dans la portion des masses molaires plus élevées et un indice de masse fondue MFI$_{5/190°C}$ inférieur ou égal à 0,35 g/10 min.

2. Tuyau selon la revendication 1, caractérisé en ce qu'il est fabriqué en un polymère d'éthylène qui possède un module de fluage à la flexion, mesuré selon la norme DIN 54852-Z4, supérieur ou égal à 1100 N/mm$^2$.

3. Tuyau selon la revendication 1 ou 2, caractérisé en ce qu'il est fabriqué en un polymère d'éthylène dans lequel le rapport du poids de la portion des faibles masses molaires au poids de la portion des masses molaires plus élevées est dans le domaine de 0,5 à 2,0.

4. Tuyau selon la revendication 3, caractérisé en ce que la portion des faibles masses molaires du polymère d'éthylène possède un indice de masse fondue MFI$_{2,16/190°C}$ dans le domaine de 200 à 800 g/10 min, de préférence de 250 à 400 g/10 min.

5. Tuyau selon l'une des revendications 1 à 4, caractérisé en ce qu'il est fabriqué en polymère d'éthylène qui possède un indice de résilience KSZ$_{ISO}$, mesuré selon la norme ISO 179 (DIN 53453) à -20°C d'au moins 15 mJ/mm$^2$ et à +23°C d'au moins 20 mJ/mm$^2$.

6. Tuyau selon la revendication 5, caractérisé en ce qu'il est fabriqué en polymère d'éthylène qui possède un indice de résilience, mesuré selon la norme ISO 179 (DIN 53453) à -20°C d'au moins 20 mJ/mm$^2$ et à +23°C d'au moins

30 mJ/mm$^2$.

7. Tuyau selon l'une des revendications 1 à 6, caractérisé en ce qu'il possède une résistance à la croissance rapide des fissures, mesurée selon la norme ISO/DIS 13477 sur un tuyau de la classe de pression PN 10 avec un diamètre de 110 mm (test S4), supérieure ou égale à 20 bars.

8. Utilisation d'un tuyau selon l'une des revendications 1 à 7 pour le transport de gaz, en particulier pour le transport de gaz naturel.

9. Utilisation d'un tuyau selon l'une des revendications 1 à 7 pour le transport de l'eau.